**Europäisches Patentamt**

**European Patent Office**

**Office européen des brevets**

(19)

(11) Veröffentlichungsnummer: **0 070 480**
**B1**

(12) # EUROPÄISCHE PATENTSCHRIFT

(45) Veröffentlichungstag der Patentschrift:
02.09.87

(51) Int. Cl.⁴: **G 01 N 3/02**

(21) Anmeldenummer: **82106183.5**

(22) Anmeldetag: **10.07.82**

(54) Verfahren und Vorrichtung zur Druckplattenlagerung in Werkstoffprüfmaschinen.

(30) Priorität: 17.07.81 DE 3128394
19.01.82 DE 3201389

(43) Veröffentlichungstag der Anmeldung:
26.01.83 Patentblatt 83/4

(45) Bekanntmachung des Hinweises auf die Patenterteilung:
02.09.87 Patentblatt 87/36

(84) Benannte Vertragsstaaten:
**CH FR GB IT LI NL**

(56) Entgegenhaltungen:
**BE-A-538 202**
**US-A-3 545 263**

(73) Patentinhaber: **Solmitz, Harald A., Kantstrasse 8**
**Postfach 5761, D-6800 Mannheim 1 (DE)**

(72) Erfinder: **Solmitz, Harald A., Kantstrasse 8**
**Postfach 5761, D-6800 Mannheim 1 (DE)**

(74) Vertreter: **Brand, Fritz, Dipl.- Ing., Gross-Umstädter- Strasse 36, D-6110 Dieburg (DE)**

EP 0 070 480 B1

LIBER, STOCKHOLM 1987

## Beschreibung

Zur Durchführung von Werkstoffprüfungsn ist es bekanntlfch notwendig, daß die Prüfbedingungen in der Prüfmaschine eindeutig und reproduzierbar sind. Bei der Druckprüfung war es bisher schwierig, diese notwendige Bedingung zu erfüllen, dies gilt insbesondere bei der Krafteinleitung über die Druckplatte auf die Probe.

Bei Druckproben sind die mit den Druckplatten in Berührung kommenden Probeflächen selten parallel zueinander. Eine der Druckplatten, bevorzugt die obere Druckplatte, muß sich daher der Neigung der oberen Probefläche anpassen können. Es ist daher üblich, die obere Druckplatte sphärisch durch Kugelkalotte und Kugelschale zu lagern. Um eine einwandfreie Anpassung der Neigung der Druckplatte an die Neigung der Probenoberfläche beim Einrichten zu erreichen, muß sich die Katotte gegenüber der Schale nahezu kraftlos neigen lassen, was praktisch einen reibungsfreien Kontakt der Flächen voraussetzt. Andererseits soll während des Versuches die obere Druckplatte in der Stellung verharren, in die sie beim Einrichten eingestellt wurde, um eine eindeutige und reproduzierbare Prüfbedingung zu haben, da bei Zulassung von Kippbewegungen während der Belastung schwer oder gar nicht seindeutig vergleichbare Aussagen über die Krafteinleitung gemacht werden können. Zur Einhaltung dieser Bedingung ist eine sehr große Reibung zwischen den Kontaktflächen notwendig.

Diese gegensätzlichen Forderungen des Einstellens der Druckplattenneigung beim Einrichten ohne merklichen Widerstand und der praktisch unbeweglichen Druckplatte während des Versuches sind mit den bisher bekannten bzw. üblichen Maßnahmen nicht zu erfüllen.

Aus der US-A-3 545 263 (entsprechend DE-OS 19 03 042) ist eine Prüfmaschine bekannt, bei der eine Druckplatte in Form einer in einer Kugelschale gelagerten Halbkugel ausgebildet ist. Die Halbkugel weist einen durch eine mittige Öffnung in der Kugelschale gehenden Zapfen auf und wird durch eine am Zapfenende angreifende Feder gegen die Kugelschale gedrückt. Durch die kugelige Lagerung soll die Druckplatte in einem begrenzten Winkel auf die Neigung der Oberfläche der Probe einstellbar sein. Nach der Einstellung soll die Druckplatte durch eine am Zapfenende wirkende Feststellvorrichtung arretiert werden. Bei dieser Ausführung bleibt in üblicher Weise sowohl bei der Einstellung als auch bei der Prüfung die gesamte Berührungsfläche von Kugelschale und Kugelkalotte im Eingriff, so daß beispielsweise bei der Einstellung auf die Neigung der Probenoberfläche die bekannten Schwierigkeiten auftreten.

Aufgabe der Erfindung ist es, ein Verfahren für eine Druckplattenlagerung und eine Vorrichtung zur Durchführung des Verfahrens zu schaffen, die es auf einfache und wirtschaftliche Weise ermöglichen, die Forderung nach leichter Einstellbarkeit beim Einrichten der Druckplatte und Unbeweglichkeit der Druckplatte während des weiteren Versuchsablaufs zu verwirklichen.

Diese Aufgabe wird durch die in den Patentansprüchen 1 und 7 angegebenen Merkmale gelöst. Die weiteren Ansprüche betreffen Ausgestaltungen der Erfindung.

Nach der Erfindung wird die Lagerung der Kugelkalotte und Kugelschale in zwei, sich zeitlich folgende, mechanische Zustände aufgeteilt, nämlich in den ersten Zustand, bei dem unter Einhaltung einer kraftschlüssigen Zentrierung der Kalotte zur Schale ein nahezu kraftloses Einstellen der Druckplatte auf die Neigung der dagegen gefahrenen Druckfläche der Probe erfolgt und den weiteren Zustand, bei dem eine Relativbewegung der Kalotte in der Schale verhindert wird.

Hierzu werden für die beiden Funktionen zwei unterschiedliche Berührungsflächen benutzt und wahlweise zusätzlich unterschiedliche kinematische Verhältnisse für den Angriff der Verstellkräfte geschaffen.

Es wird zu Beginn des Versuchs die Kugelschale gegenüber der Kalotte durch eine oder mehrere Teilflächen abgestützt, deren Oberflächen durch sehr gute Gleiteigeschaften gekennzeichnet sind, wobei die Anordnung dieser Teilflächen in oder nähe der Mitte der Kalotte eine leichte Verstellung begünstigen und diese als Stützflächen wirkenden Teilflächen nach Überschreiten einer geringen Vorlast zurückgeschoben werden, wodurch eine Anlage auf der zweiten Teilfläche eintritt, die annähernd der ganzen Berührungsfläche zwischen Kalotte und Schale entspricht, wobei beide oder eine der Berührungsflächen ganz oder teilweise größere Reibwiderstände besitzen.

Eine weiters Maßnahme besteht darin, daß die Kinematik der Kippbswegung für die beiden Zustände unterschiedlich gewählt wird, wobei in der ersten Phase, der Einrichtungsphase, der Mittelpunkt des Radius der Kugelschale in der Druckflächenebene der Druckplatte liegt, und dadurch ein günstiger Angriff der Verstellkräfte erreicht wird und bei der Berührung von Probe und Druckplatte keine horizontalen Reibwiderstände auftreten, die der Kippbewegung entgegenwirken. In der zweiten Phase während der Belastung der Probe liegt dagegen der Mittelpunkt des Radius der Kugelschale unterhalb der Druckfläche der Druckplatte, wodurch der Verstellung der Platte zusätzlich horizontale Reibkräfte entgegenwirken.

In der ersten Phase, nämlich der Einrichtphase, wird der Formschluß zwischen Kalotte und Abstützung durch verschiebbare Stützelemente bewirkt, die durch Federkraft oder hydraulischen Druck belastet sind und die Kalotte gegen die Schale abstützen, wobei die Stirnflächen der Stützelemente aus einem Werkstoff mit sehr guten Gleiteiganschaften bestehen oder damit beschichtet sind. In der zweiten Phase, bei Beginn des eigentlichen Druckversuchs, wird durch die Prüflast der Gegendruck der Federkraft oder des hydraulischen Druckes, die auf die Stützelemente wirken, überwunden, die Stützelemente treten zurück und die Kalotte und die Schale bekommen nahezu auf ihren ganzen Berührungsflächen direkt Kontakt. Um den Bewegungswiderstand zwischen den beiden Teilen zu erhöhen, wird die Oberfläche einer der beiden Teile mit einer höheren Rauhigkeit hergestellt, und zwar der Teil, in dem die Stützelemente eingebaut sind. Die Gegenfläche kann zusätzlich an den Flächen, auf denen die Stirnflächen der Stützbolzen oder -büchsen nicht anliegen, einen größeren Rauhigkeitsgrad erhalten.

Beim Zurücktreten der Stützelemente verschiebt sich die Druckfläche der Druckplatte vom Mittelpunkt des Schalenradius fort zur Schale hin, wodurch der Mittelpunkt dann unterhalb der Druckfläche liegt.

In Abhängigkeit von der Art des Versuches, den Versuchsbedingungen, den Dimensionen der Probe und der Druckplatte, kann es vorteilhaft und wünschenswert sein, den Widerstand der Druckplatte gegenüber einer Neigungsänderung ändern zu können, um optimale Verhältnisse in der Ausrichtphase und der Versuchsphase zu schaffen.

Das von der Probe auf die Druckplatte ausgeübte Einstellmoment ist nämlich von unterschiedlicher Größe. Bei einer angenommenen Größe, z. B. der Druckplattendiagonale und des Kugelschalenradius R, ist das von der geneigten Probenoberfläche ausgeübte Einstellmoment klein, wenn die Probendiagonale klein gegenüber den beiden obigen Gerätemaßen ist, wogegen das Einstellmoment im Verhältnis hierzu größer ist, wenn die Probendiagonale größer als die obigen Gerätemaße ist, insbesondere größer als der Kugelschalenradius.

Um ein sicheres Einstellen der Druckplatte zu gewährleisten, soll daher, wenn auf einer Prüfmaschine eine Probe mit kleiner Diagonale untersucht werden soll, der Widerstand, der dem Einsteilen der Druckplatte entgegenwirkt, möglichst klein sein, wogegen bei Untersuchungen einer Probe mit großer Diagonale insbesondere bei längeren Rerchtechproben der Einstallwiderstand größer sein sollte, um labile Verhältnisse zu vermeiden.

Nach einer Weiterbildung der Erfindung wird die Änderung des Einstellwiderstandes dadurch erreicht, daß der Widerstand der Druckplatte gegenüber einer Änderung ihrer Neigung dadurch eingestellt wird, daß eine auf die Berührungsflächen wirkende Vorspannkraft und/oder das Verhältnis der auf die Berührungsflächen wirkenden Vorspannkräfte eingestellt wird.

Hierzu werden bevorzugt hydraulische Vorspanneinrichtungen benutzt, die kombiniert mit Vorspannfedern, z. B. Stahlfedern, oder auch ohne solche Federn arbeiten. Die Vorspanneinrichtungen können entweder in der Kugelkalotte oder auf der Seite der Kugelschale oder auch teils in der Kugelkalotte, teils auf der Seite der Kugelschale eingebaut sein.

Die Stützbüchsen können während der Versuchsphase zurückgezogen sein und keinen Kontakt mit der Gegenfläche haben oder sie können mit einer gegebenenfalls konstanten Spannung der Vorspannfeder oder des Drucks in der hydraulischen Kammer angelegt bleiben und als Rückstoßdämpfer bei der Rückfederung der Druckplatte nach dem Probenbruch arbeiten.

Die Erfindung wird nun an Hand von Zeichnungen, die bevorzugte Ausführungsformen darstellen, weiterhin erläutert.

Es zeigen:

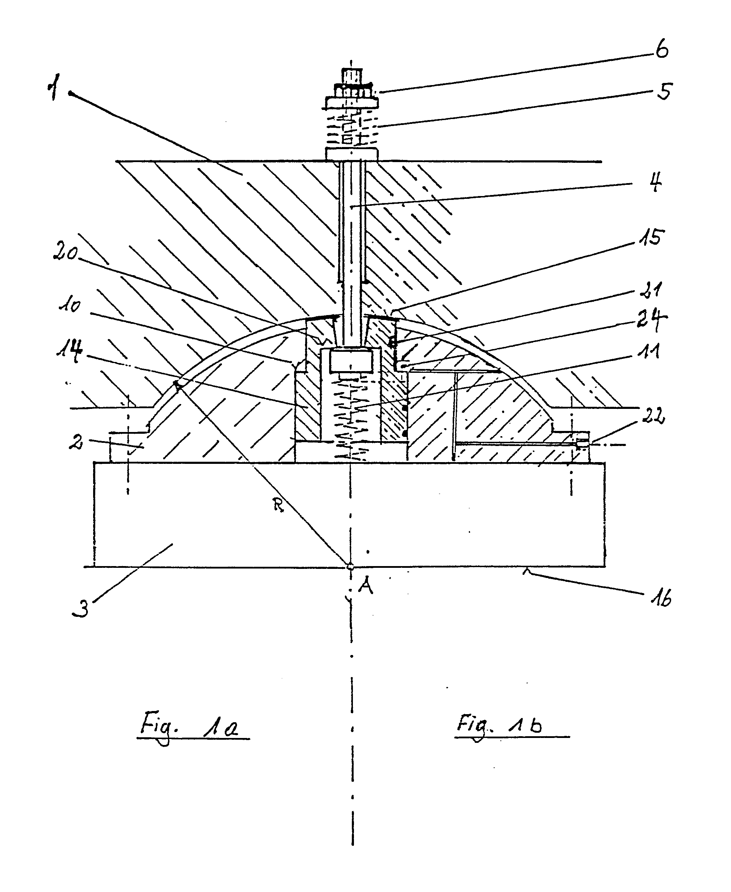

Fig. 1 a Druckplatte mit Mittelbolzenaufhängung und zentraler Stützbüchse

Fig 1 b Druckplatte mit Mittelbolzenaufhängung und zentraler Stützbüches für die Rückstoßdämpfung.

Fig 2 a Druckplatte mit Mittelbolzenaufhängung und radial angeordneten Stützbolzen

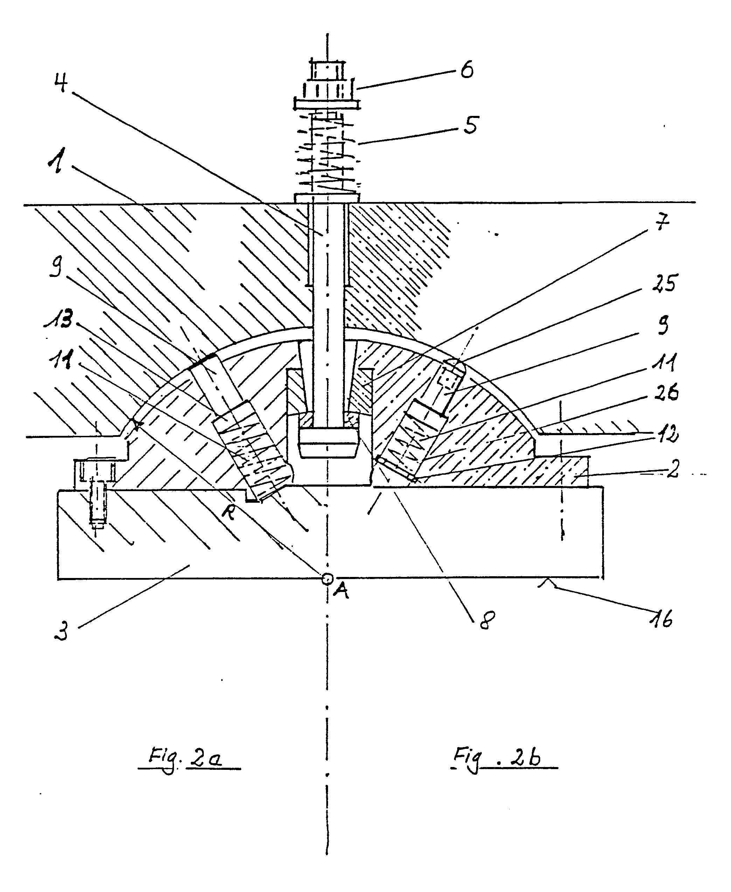

Fig 2 b wie 2 a, jedoch mit Stützring für die Vorspannfeder

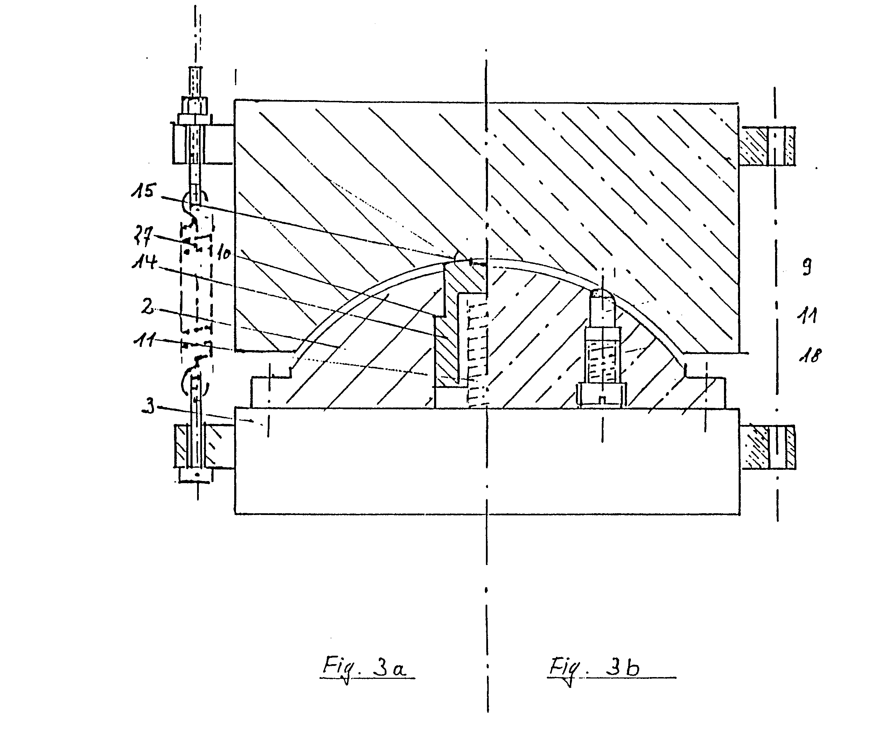

Fig 3 a Druckplatte mit am Außenrand angreifenden Tragfedern und zentrischer Stützbüchse

Fig 3 b Druckplatte wie 3 a mit parallel zur Maschinenachse in der Kalotte angeordneten Stützbolzen.

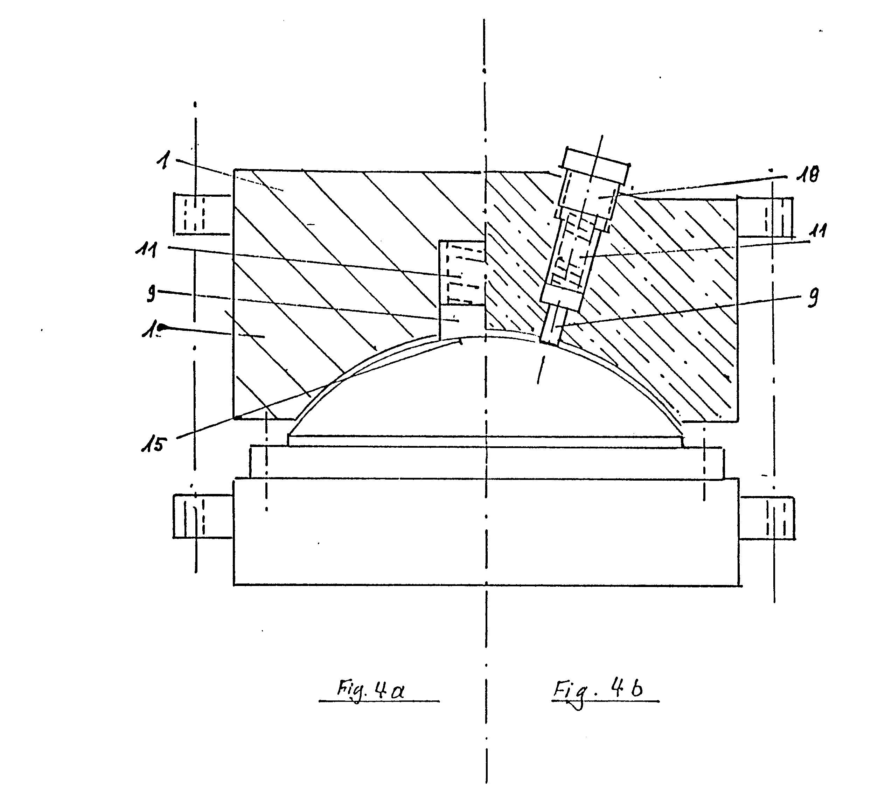

Fig. 4 a Druckplatte wie 3 a mit Anordnung eines mittigen Stützbolzens in der Kugelschale

Fig 4 b Druckplatte wie 3a mit radial angeordneten Stützholzen in der Kugelschals

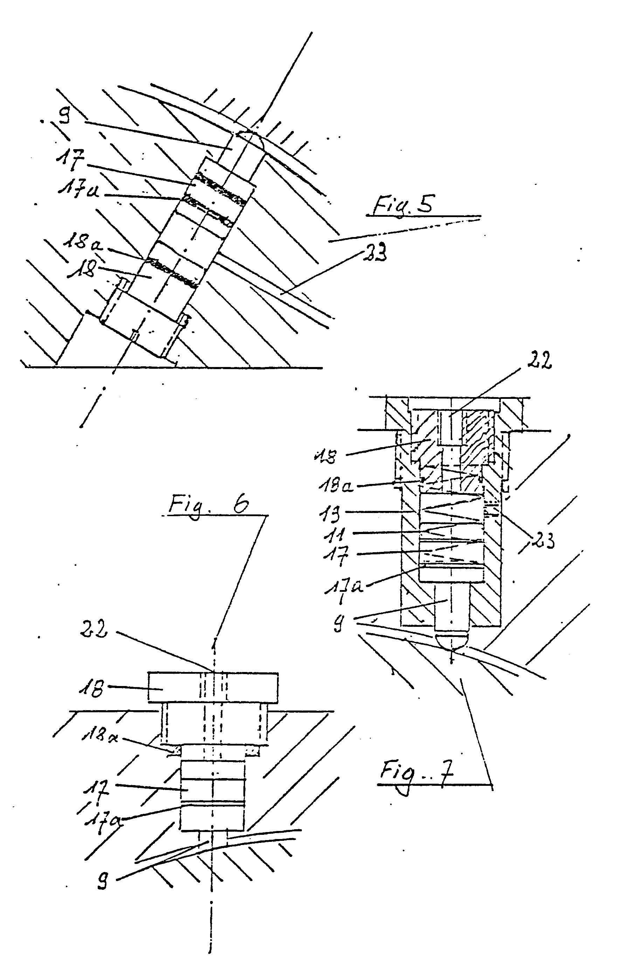

Fig. 5 Stutzbolzen mit hydraulischer Anpressung in die Kalotte eingebaut

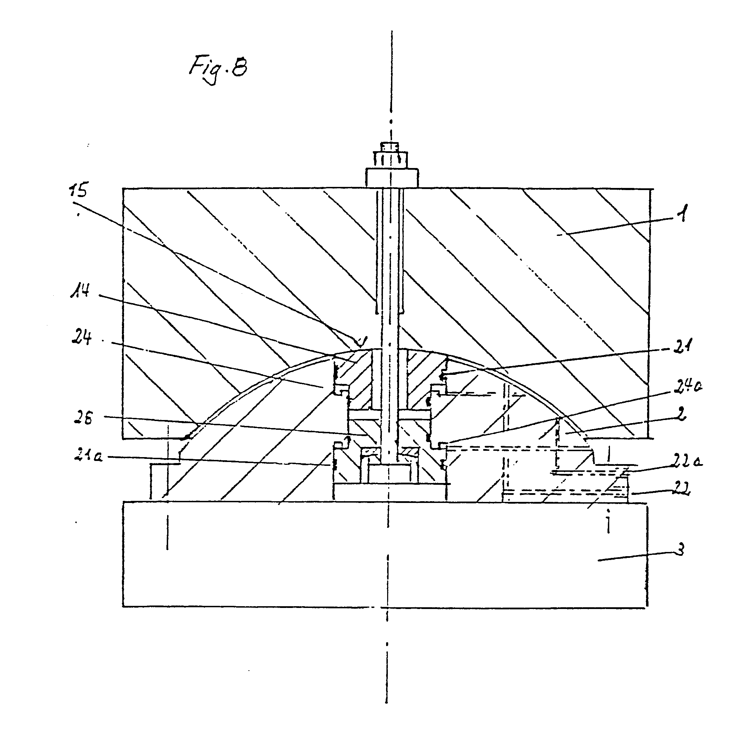

Fig. 6 Stützbolzen mit hydraulischer Anpressung in die Kugelschale eingebaut

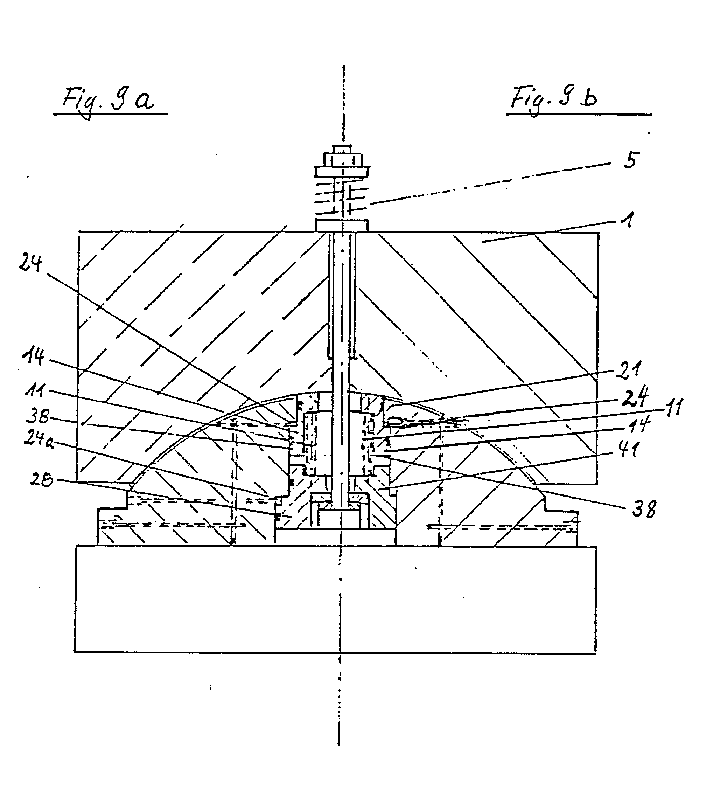

Fig. 7 Komplettes Stützelement zum Einbau in Kugelschale oder Kalotte

Fig. 8 Druckplatte mit hydraulischer Stützbüchse und hydraulischer Tragbüchse in der Kugelkalotte,

Fig. 9 a Druckplatte mit hydraulischer Stützbüchse und hydraulischer Tragbuchse in einer einseitigen Bohrung der Kugelkalotte,

Fig. 9 b Druckplatte mit hydraulischer Stützbüchse und Tragscheibe 41 in einer einseitigen Bohrung der Kugelkalotte;

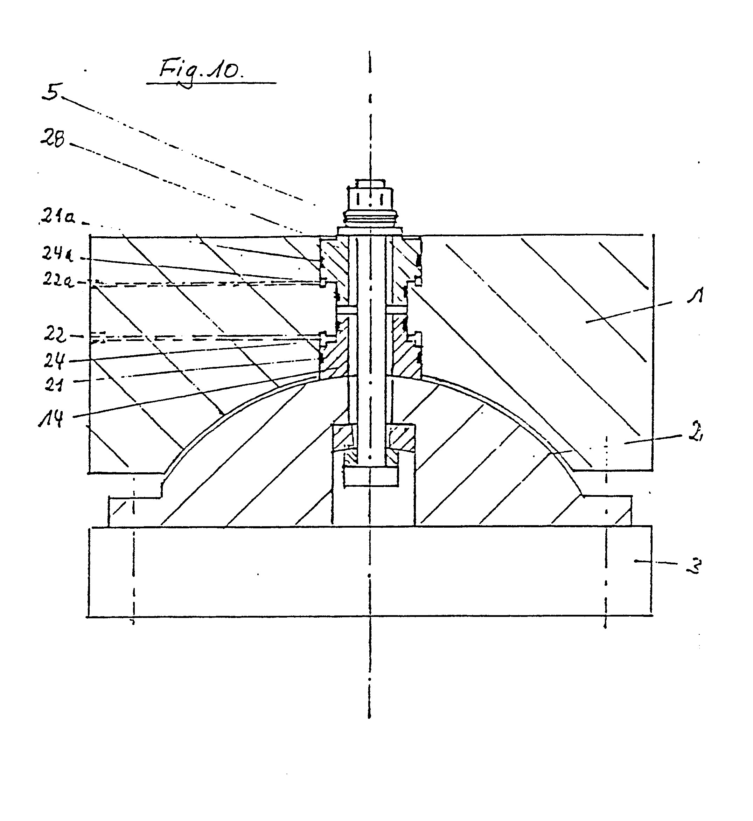

Fig. 10 Druckplatte mit hydraulischer Stützbüchse und hydraulischer Tragbüchse in der Kugelschale,

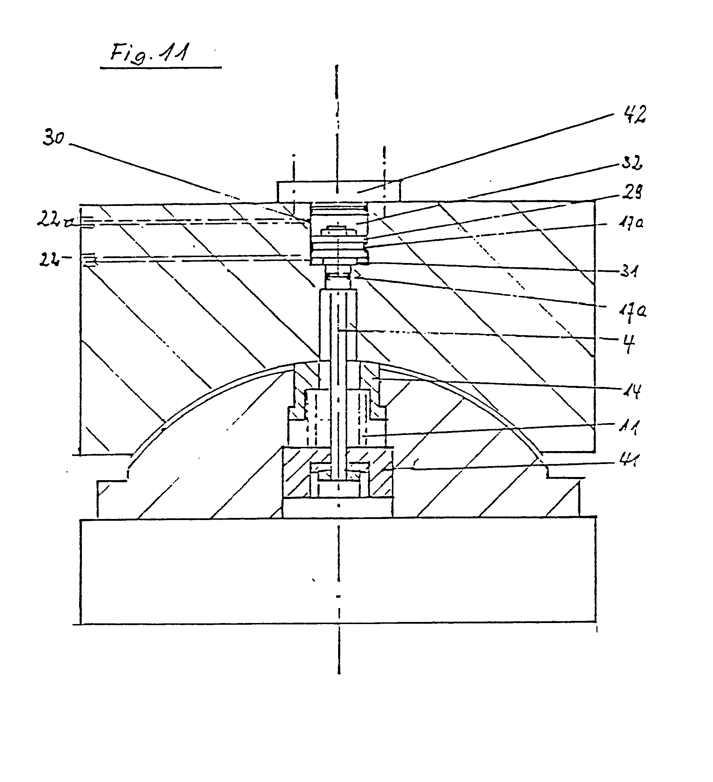

Fig. 11 Druckplatte mit federbelasteter Stützbüchse und Hydraulik-Kolben am Tragbolzen,

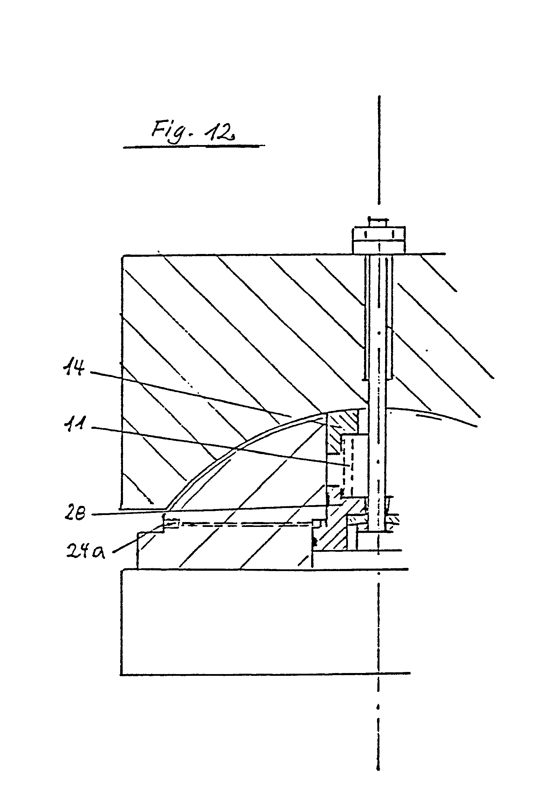

Fig. 12 Druckplatte mit hydraulischer Tragbüchse und federbelasteter Stützbüchse in der Kugelkalotte,

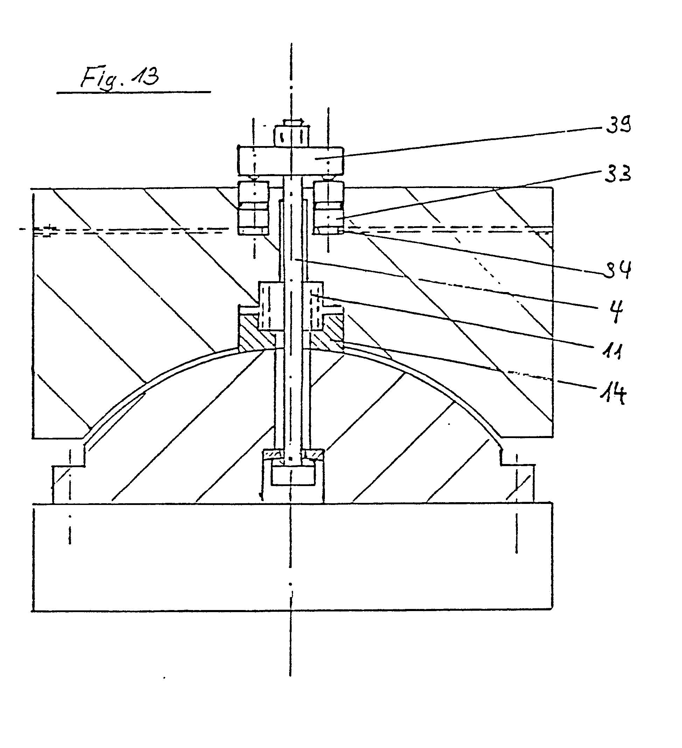

Fig. 13 Druckplatte mit fedsrbelasteter Stützbüchse und mehreren Hydraulik-Kolben für den Tragholzen, in der Kugelschale angeordnet,

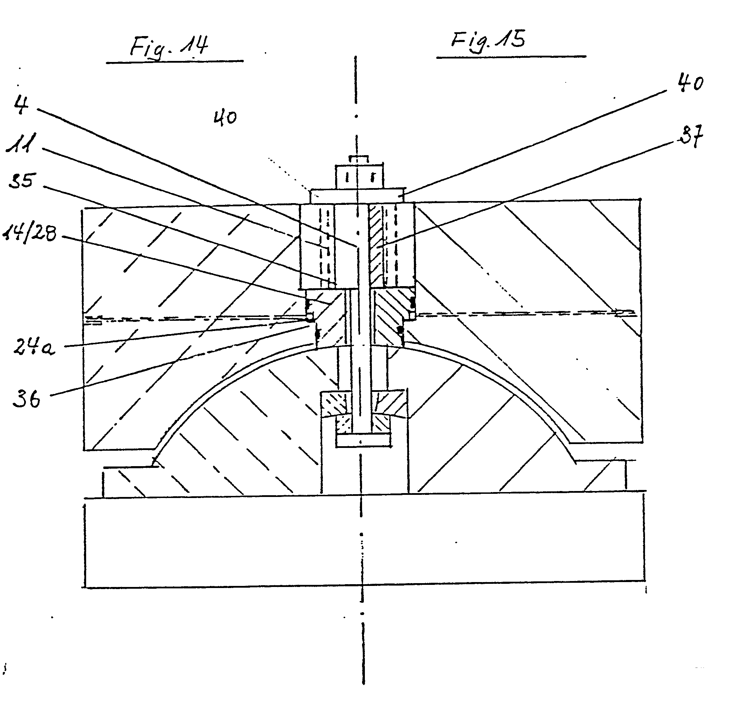

Fig. 14 Druckplatts mit kombinierter Stützbüchse-Tragbüchse in der Kugelschale angeordnet,

Fig. 15 Druckplatte mit kombinierter Stützbüchse-Tragbüchse in der Kugelschale angeordnet, mit Distanzbüchse.

Die Figur 1 a zeigt die Ausführung des Erfindugnsgegenstandes an einer durch einen Trag- oder Mittelbolzen 4 aufgehängten Druckplatte 3. In der Kugelkalotte 2 ist eine in Achsrichtung verschiebbare Stützbüchse 14 angeordnet, deren obere Stirnfläche 15 eine Oberfläche mit guten Gleiteigenschaften besitzt, z. B. Kunststoffbeschichtung. Durch Anspannen der Feder 5, durch die Mutter 6, ist die Stützbüchse mit anhängender Druckplatte soweit angehoben, daß die Stirnfläche 15 der Stützbüchse 14 an der Kugelschale 1 mit geringem Druck anliegt. Die Kalotte und Druckplatte liegen auf der Außenschulter 10 der Stützbüchse auf, die durch die Vorspannfeder 11 gegen den Tragbolzen 4 verspannt ist. Beim Ausrichten der Druckplatte wird diese nur durch die spherische Stirnfläche 15 der Stützbüchse 14 geführt. Beim Belasten wird die Kraft der Vorspannfeder 11 überwunden und die ganze restliche Kalotte mit rauherer Oberfläche legt sich gegen die Restkugelschale direkt an. Während der Einrichtphase liegt der Mittelpunkt A des Radius R der Kugelschale 1 in der Druckplattenebene 16, in der Arbeitsstellung liegt der Punkt A unterhalb der Druckplattenebene 16.

Auf der Figur 1 b ist die gleiche Anordnung dargestellt, jedoch mit einer hydraulischen Rückstoßdämpfung. Die Ringkammer 24 ist während des Belastungsvorganges über die Druckleitung 22 mit einem Hydraulikspeicher verbunden, der ein konstantes Druckniveau besitzt. Damit ist folgendes machbar: das zur Dämpfung notwendige Druckniveau kann die Vorspannfeder 11 weiter spannen und damit die Kugelkalotte gegen die Kugelschale anhebend anpressen, wobei gleichzeitig die Stützbüchse 14 nach unten geschoben werden kann, bis sie unter der Kalottenoberfläche verschwindet, beim Einstellvorgäng kann die Ringkammer drucklos sein.

Bei der Ausführung nach Fig. 2 a ist die Kugelkalotte durch mindestens drei Stützbolzen 9 abgestützt und ausgerichtet, die in Bohrungen der Kalotte gleiten und mit Federn 11 vorgespannt sind. Die Federn stützen sich gegen die Druckplatte 3 ab.

Bei der Ausführung nach Fig. 2 b sind ähnliche Stützbolzen 9 vorhanden. Die Vorspannfeder 11 stützt sich gegen eine Endscheibe 12, z. B. einen Seeger-Ring ab. In die Stirnfläche der Stützbolzen sind Gleitstücke 25 aus einem leicht gleitenden Werkstoff eingesetzt. Auch hier verschiebt sich die Druckplattenebene 16 vom Mittelpunkt A des Schalenradius R bei Belastung nach oben. Die Auflagefläche des Tragbolzens 4 mit kleiner Kugelkalotte 8 gegen die kleine Kugelschale 7 ist an den Mittelpunkt der Kugelkalotte 2 herangeführt, um die Einstellkräfte für die Druckplatte 3 gering zu halten.

In der Fig. 3 a ist die Ausführung des Erfindungsgegenstandes an einer Druckplatte gezeigt, die an mindestens drei Federn 27 aufgehängt ist, die am äußeren Rand der Druckplatte 3 angreifen. In die Kugelkalotte 2 ist mittig eine Stützbüchse 14 eingebaut, deren Schulter durch die Feder 11 gegen die Schulter 10 der Bohrung in dar Kalotte 2 gedrückt wird.

Bei der Ausführung nach Fig. 3b sind drei Stützbolzen 9 parallel zur Maschinenachse in der Kugelkalotte angeordnet.

Die Vorspannung der Feder 11 kann mit der Schraube eingestellt werden.

Bei der Ausführung nach Fig. 4 a an einer ähnlich aufgehängten Druckplatte ist ein Stützbolzen 9, der in der mittigen Bohrung der Kugelschale 1 angeordnet ist und der durch die Feder 11 belastet ist, vorgesehen.

Bei der Ausführung nach Fig. 4 b sind mindestsns drei Stütbolzen 9 in der Kugelschale radial angeordnet. Die nach oben hin offene Führungsbohrung ist durch eine Schraube 18 geschlossen, der zum Vorspannen der Feder 11 dient.

In einer weiteren Ausführungsform wird die Vorspannung für die Stützbolzen oder -büchsen hydraulisch aufgebaut.

Nach der Ausführung der Fig. 5 ist dar Stützbolzen 9 mit einem Kolben 17 mit Dichtungsringen 17a verbunden, der in einer Bohrung der Kalotte gleitet. Die Rückseite der Bohrung ist mit Dichtringen durch einen dichtenden Stopfen 18 verschlossen. Das Drucköl wird durch die Leitung 23 zugeführt.

Nach der Ausfuhrung gemäß Fig. 6 ist das Stützelement in der Kugelschale 1 angeordnet, die Bohrung für die Führung von Stützbolzen 9 und Druckkolben 17 ist von oben her eingearbeitet und mit einem Gewindestopfen 18 mit Anschlußbohrung 22 für die Druckleitung verschlossen.

Bei der Ausführung nach Fig. 7 ist ein komplettes Stützelement mit Zylinder 19, Vorspannkolben 17 und Stützbolzen 9 in die Kugelschale eingesetzt.

Das gleiche Element kann auch in die Kugelkalotte eingebaut sein. Anstelle des hydraulischen Druckes können diese kompletten Stützelemente mit Federvorspannung ausgerüstet sein.

Die oben beschriebenen hydraulischen Stützelemente sind an einen Druckspeicher mit konstantem Öldruck angeschlossen oder sie werden von einer Speisepumpe versorgt. Die Speisepumpe fördert über einen Druckregler und ein dahinter geschaltetes Rückschlagventil in die Stützelemente. Ein Überdruckventil ist an das Stützelement angeschlagen.

Die Stirnflächen der Stützbüchsen bzw. Stützbolzen, die in die Kugelschale eingebaut sind, haben eine der Kugelschale angepaßte Form Fig. 2 a) oder sind kugelig (Fig. 3 b) ausgebildet.

Die Stirnfläche der Stützbolzen und -büchsen, die in der Kugelschale 1 eingebaut sind, haben eine der Kugelschale angepaßte Form oder eine kugelige bzw. eine ebene Form (Fig. 4b).

Die Fig. 8 zeigt die Ausführung des Erfindungsgegenstandes an einer Anordnung, bei der zwei hydraulische Spanneinrichtungen benutzt werden, die in die Kugelkalotte 2 eingebaut sind, und die unabhängig voneinander arbeiten können. Bei dieser Anordnung kann auf eine Tragfeder z. B. Schraubenfeder verzichtet werden. Die Vorspannung zur Anlage der Stirnfläche 15 der Stützbuchse 14 gegen die Kugelschale 1 in der Einrichtsphase wird durch die Druckkammer 24 bewirkt. Die Anlage der Kugelkalotte nach Beendigung der Einstellphase an die Kugelschale wird durch die Tragbüchse 28 mit Druckkammer 24a bewirkt. Während des Einstellvorganges kann die Druckkammer 24a drucklos sein und die Druckkammer 24 kann mit einem Druck beaufschlagt werden der die Stützbüchse gerade an die Kugelschale anlegt oder mit einer höheren Vorspannung anpreßt. Nach Einstellen der Druckplatte auf die Neigung der Prüfkörperoberfläche kann der Prüfkörper und die Druckplatte durch den z. B. unten liegenden hydraulischen Antrieb der Maschine angehoben werden bis die Kugelkalotte an der Kugelschale anliegt und dann über die Ringkammer 24a eine Vorspannung erzeugt werden: es kann aber auch zunächst die Druckplatte über die Ringkammer 24a angehoben und gegen die Kugelschale gedrückt werden bevor der hydraulische Antrieb der Maschine die Probe anhebt. Während des Druckversuches kann die Ringkammer 24 drucklos sein, so daß die Stützbüchse hinter die Oberfläche der Kugelkalotte absinken kann.

Nach einer anderen Ausführungsform kann die Ringkammer 24a unter einem gegebenenfalls konstanten hydraulischen Druck stehen und über die Stützbüchse als Stoßdämpfer beim Rückfedern der Druckplatte nach dem Probenbruch dienen.

Die Kugelkalotte selbst kann während des Versuches durch die Tragbüchse gegen die Kugelschale gedrückt werden, wodurch die übliche Vorspannfeder entfallen kann.

Fig. 9 a zeigt den Erfindungsgegenstand in einer Ausführungsform, bei der die Stüzbüchse 14 und die Tragbüchse 28 beide von einer Seite der in die zylindrische Bohrung der Kugelkalotte eingebracht werden können. Die Stützbüchse wird durch die Feder 11 gegen die Kugelschale gedrückt. Die Anpreßkraft wird durch die der Federkraft entgegenwirkende hydraulische Kraft in der Ringkammer 24 eingestellt. Nach der Einstellphase kann die Stützbüchse durch den hydraulischen Druck in Kammer 24 hinter die Kalotten-Oberfläche zurückgezogen werden. Die Tragbüchse 28 besitzt eine hydraulische Druckkammer 24a.

Fig 9 b zeigt den Erfindungsgegenstand in einer Ausführungsform, in der nur die Stützbüchse einen hydraulischen Antrieb mit Druckkammer 24 besitzt. In der Einstellphase wird nach Absenken des Druckes in der Kammer 24 die Feder 11 wirksam und die Stützbüchse tritt aus der Kugelkalotte heraus. Beim Übergang zum Versuch wird die Stützbüchse durch Druckanstieg in der Kammer 24 zunächst zurückgezogen, sodann setzt sich das verlängerte untere Teil der Stützbüchse als Hubbegrenzung 38 auf die Tragscheibe 41 ab, wobei der weitere Druckanstieg in der Kammer 24 die Kugelkalotte gegen die Kugelschale andrückt.

Die Stützbüchse 21 und die Feder 11 können gegebenenfalls den Rückstoß bei der Rückfederung der Druckplatte dämpfen.

In der Fig. 10 ist der Gegenstand der Erfindung in einer Ausführung gezeigt, bei der die hydraulische Stützbüchse 14 und die hydraulische Tragbüchse 28 auf der Seite der Kugelschale angeordnet ist, wobei die Funktion der Anordnung sinngemäß die gleiche ist, wie zur Fig. 1 beschrieben. Für die Aufhängung der Druckplatte kann zusätzlich eine Druckfeder 5 eingebaut sein.

Bei der Ausführungsform nach Fig. 11 ist eine Vorspanneinrichtung mit einer Hydraulik, die andere mit einer Feder ausgerüstet, wobei der Tragbolzen mit dem Kolben 29 verbunden ist, der in der Zylinderbohrung 30 gleiten kann, und die Stützbüchse 14 von der Vorspannfeder 11 belastet wird. Beim Einstellvorgang wird der Druckraum 31 entlastet, wodurch die Stützbüchse 14 aus der Kugelkalotte heraustritt. Die Vorspannfeder 11 kann unabhängig von der Vorspannung im Tragbolzen dimensioniert werden. Oberhalb des Kolbens ist eine Kammer 32, die als Rückstoßdämpfe wirken kann, eingebaut, die mit einem Überdruckventil oder einem Druckakkumulator verbunden sein kann, zur Einstellung der Dämpfungswirkung. Der Zylinder mit Kolben 29 kann auch als separates Element auf der Oberfläche der Kugelschalentraverse angeordnet sein, womit ein hydraulischer Antrieb gegeben ist.

In der Fig. 12 ist, eine Anordnung mit, Stütztbüchse 14, Spannfeder 11 und hydraulischer Tragbüchse 28 dargestellt. In der Einstellphase ist die Druckkammer 24a entlastet, wodurch die Stützbüchse allein zur Anlage kommt.

Bei der Ausführungsform nach Fig. 13 sind mindestens zwei Zylinderbohrungen 34 mit Plunscherkolben 33 vorhanden, die über eine Tragscheibe 39 den Tragbolzen 4 anheben können. Die Stützbüchse 14 wird mit der Feder 11 belastet. Die Plunscherkolben können auch in getrennten Zylindern angeordnet werden, die auf der Kugelschalentraverse angsordnet sind.

Bei der Ausführungsform nach Fig. 14 ist die Stützbüchse 14 und die Tragbüchse 28 in einem Bauteil vereinigt (sogenannte Stütz-Tragbüchse). In der Einrichtephase kann die Druckkammer 24a drucklos sein, wodurch die Stütz-Tragbüchse 14/28 auf der Schulter 36 der Kugelschale aufliegt. In der Versuchsphase wird die Stütz-Tragbüchse durch Druck in der Kammer 24 a angehoben, worauf sich die Stütz-Tragbüchse gegen die Schulter 35 des Tragbolzens 4 anlegt und die Vorspannung für diesen übernimmt.

Der Hub der Stütz-Tragbüchse 14/28 kann so ausgelegt sein, daß die Stütz-Tragbüchse sich erst dann gegen die Schulter 35 des Tragbolzens 4 anlegt, wenn die Stütz-Tragbüchse hinter die Oberfläche der Kugelschale zurückgetreten ist.

In der Fig. 15 ist eine Ausführungsform gezeigt, bei der anstelle der Schulter 35 der Abb. 14 eine Distanzbüchse 37 verwendet wird.

An die Stelle der Distanzbüchse kann auch eine Feder treten.

Die Zeichnungen zeigen beispielhafte Kombinationen und Anordnungen von Stützbüchse und Tragbüchse.

Die Einstellung der Spann- oder Verspann Kräfte ist wie folgt möglich:

1. Eine oder beide Spannkräfte werden durch die Art der Konstruktion unveränderbar festgelegt, gegebenenfalls ist ihr Verhältnis vor oder während des Versuchs veränderbar.

2. Eine oder beide Spannkräfte werden vor dem Versuch eingestellt.

3. Eine oder beide Spannkräfte können während des Versuchs geregelt werden.

Durch das Verfahren und die Vorrichtung nach der Erfindung werden eindeutige und reproduzierbare Prüfbedingungen für die Durchführung von Druckversuchen erhalten, da sowohl die leichte Einstellbarkeit der Druckplattenneigung in der Einstellphase verwirklicht ist, wie auch die Verhinderung von Relativverschiebungen der Kalotte und Schale während des eigentlichen Druckversuches. Zur Erreichung dieses Zieles werden nur wenige zusätzliche, einfache Maschinenelemente benötigt, so daß eine wirtschaftliche Herstellung der Vorrichtung gegeben ist.

**Bezugszeichenliste**

1 Kugelschale
2 Kugelkalotte
3 Druckplatte
4 Trag- oder Mittelbolzen
5 Feder zum Tragbolzen
6 Mutter zum Tragbolzen
7 Kleine Kugelschale
8 Kleine Kugelkalotte
9 Stützbolzen
10 Schulter
11 Vorspannfeder
12 Stützring/Endscheibe für Feder
13 Bund am Stützbolzen
14 Stützbüchse
15 Sphärische Stirnfläche der Stützbüchse
16 Druckfläche/Druckplattenbene der Druckplatte
17 Kolben im Stützelement
17a Dichtungsring am Kolben
18 Gewindestopfen/Schraube
18 a Dichtungsring
19 Zylinder
20 Sphärische Fläche in der Stützbüchse
21 Dichtungsring der Stützbüchse

21a Druckanschluß für die Druckkammer des Tragkolbens
22 Hydraulikanschluß/Druckleitung
22a Druckanschluß für die Tragbüchse
23 Hydraulikanschluß/Druckleitung (Stützbolzen)
24 Druckkammer/Ringkammer zwischen der Schulter der Stützbüchse und der Schulter der Kalottenbohrung oder der Kugelschalenbohrung
24a Druckkammer/Ringkammer zwischen der Schulter der Tragbüchse und der Schulter der Kalottenbohrung oder Kugelschalenbohrung
25 Eingesetztes Gleitstück
26 Bohrung für Stützbolzen
27 Feder der Aufhängung der Kugelkalotte und Druckplatte
28 Tragbüchse
29 Kolben am Tragbolzen
30 Zylinderbohrung,
31 Druckraum
32 Kammer
33 Plunscherkolben
34 Zylinderbohrung für Plunscherkolben
35 Tragbolzenschulter
36 Stützbüchsenschulter
37 Distanzbüchse
38 Hubbegrenzung
39 Tragscheibe mit mehreren Kolben
40 Federteller
41 Tragscheibe
42 Deckel zur Kammer

**Patentansprüche**

1. Verfahren zur Lagerung und Einstellung von Druckplatten in Werkstoffprüfmaschinen, die eine Druckplatte mit Kugelkalotte, eine mit der Prüfmaschine verbindbare und die Kugelkalotte aufnehmende Kugelschale und Verbindungselemente zur Verbindung von Kugelkalotte und Kugelschale aufweisen, wobei zunächst die Einstellung der Druckplatte auf die Neigung der Druckfläche der Probe erfolgt und danach bei Belastung eine Relativbewegung zwischen Kugelkalotte und Kugelschale verhindert wird, dadurch gekennzeichnet,
- daß zur nahezu kraftlosen Einstellung der Druckplatte auf die Neigung der dagegen gefahrenen Druckfläche der Probe unter Einhaltung einer Zentrierung der Kugelkalotte zur Kugelschale ein erstes Berührungsflächenpaar zur Einwirkung gebracht wird, das aus konzentrisch zur Kugelschalenachse angeordneten, gegeneinander abstützbaren Kugelschalen- und Kugelkalottenelementen besteht und das eine Berührungsfläche mit geringer Reibung bildet,
- und daß danach bei Belastung ein zweites Berührungsflächenpaar, bestehend aus Kugelkalotte und Kugelschale, zur Einwirkung gebracht wird, wobei die zweiten Berührungsflächen einen hohen Reibungskoeffizienten aufweisen, so daß bei Anlage der Kugelkalotte an der Kugelschale eine Relativbewegung zwischen Kugelkalotte und Kugelschale durch Kraftschluß bzw. Haftreibung verhindert wird.

2. Verfahren nach Anspruch 1, dadurch gekennzeichnet, daß bei der Einstellung der Druckplatte der Mittelpunkt der Kugelschale (A) in der Druckflächenebene der Druckplatte und bei Belastung der Mittelpunkt (A) unterhalb der Druckflächenebene liegt.

3. Verfahren nach Anspruch 1 oder 2, dadurch gekennzeichnet, daß der Widerstand der Druckplatte gegenüber einer Änderung ihrer Neigung dadurch eingestellt wird, daß eine auf die Berührungsflächen wirkende Vorspannkraft und/oder das Verhältnis der auf die Berührungsflächen wirkenden Vorspannkräfte eingestellt wird.

4. Verfahren nach Anspruch 3, dadurch gekennzeichnet, daß mindestens eine Vorspannkraft vor und/oder während des Versuchs verändert wird.

5. Verfahren nach Anspruch 3 oder 4, dadurch gekennzeichnet, daß die Erzeugung oder Veränderung der Vorspannkraft mechanisch bewirkt wird.

6. Verfahren nach Anspruch 3 oder 4, dadurch gekennzeichnet, daß die Erzeugung oder Veränderung der Vorspannkraft hydraulisch bewirkt wird.

7. Vorrichtung zur Lagerung und Einstellung von Druckplatten in Werkstoffprüfmaschinen, die eine Druckplatte (3) mit Kugelkalotte (2), eine mit der Prüfmaschine verbindbare und die Kugelkalotte (2) aufnehmende Kugelschale (1) und Verbindungselemente zur Verbindung von Kugelkalotte und Kugelschale aufweist, zur Durchführung des Verfahrens nach einem der Ansprüche 1 bis 6, dadurch gekennzeichnet, daß in der Kugelschale (1) oder in der Kugelkalotte (2) mindestens ein gegen die Lagerfläche der Kugelkalotte (2) bzw. Kugelschale (1) verschiebbares Stützelement (9, 14) zur Abstützung der Kugelkalotte (2) an der Kugelschale (1) angeordnet ist, daß die mit der Kugelschale (1) bzw. Kugelkalotte (2) in Berührung tretende Oberfläche des Stützelements gute Gleiteigenschaften besitzt und daß das Stützelement zur Abstützung der Kugelkalotte (2) an der Kugelschale (1) durch Federn (11) oder hydraulisch über Zylinder-Kolben-Anordnungen beaufschlagbar ist.

8. Vorrichtung nach Anspruch 7, dadurch gekennzeichnet, daß die Stützelemente als mittig angeordnete Stützbüchse (14) oder in Form von mindestens drei, über die Fläche der Kugelschale (1) bzw. Kugelkalotte (2) verteilte Stützbolzen (9) ausgebildet sind.

9. Vorrichtung nach Anspruch 8 mit einem als Tragbolzen ausgebildeten Verbindungselement, dadurch gekennzeichnet, daß der Tragbolzen (4) an der Kugelschale (1) angeordnet und durch eine zentrische Öffnung der Stützbüchse (14) geführt ist, daß die Stützbüchse (14) mit einer Innenschulter an einem Bund des Tragbolzens aufliegt, wobei die Abstützung zwischen dem Bund des Tragbolzens (4) und der Stützbüchse (14) über sphärische Flächen (20) erfolgt, daß die Stützbüchse (14) eine Außenschulter (10) aufweist, an welche die Kugelkalotte (2) anlegbar ist und daß eine Vorspannfeder (11) vorgesehen ist, mit der Stützbüchse (14) und Kugelkalotte (2) gegeneinander in der Weise verspannbar sind, daß die Berührungsfläche der Stützbüchse über die Berührungsfläche der Kugelkalotte (2) hinausragt.

10. Vorrichtung nach Anspruch 9, dadurch gekennzeichnet, daß eine zwischen der Außenschulter (10) der axial verschiebbaren Stützbüchse (14) und der Kugelkalotte (2) gebildete Ringkammer (24) mit einem Druckmittel beaufschlagbar ist.

11. Vorrichtung nach Anspruch 8 mit einem als Tragbolzen ausgebildeten Verbindungselement, dadurch gekennzeichnet, daß die Stützbolzen (9) einen Bund (13) aufweisen und über eine Feder (11) an der Kugelkalotte (2) abgestützt sind und daß die Kugelkalotte (2) an sphärischen Flächen auf einem Bund des Tragbolzens (4) abgestützt ist.

12. Vorrichtung nach Anspruch 8, dadurch gekennzeichnet, daß die Stützelemente aus Zylindern (19), Kolben (17) mit Dichtungsringen (17a), Stützbolzen (9) und Gewindestopfen (18) mit Dichtungsring (18a) bestehen.

13. Vorrichtung nach Anspruch 7 mit einem als Tragbolzen ausgebildeten Verbindungselement, dadurch gekennzeichnet, daß in der Kugelkalotte (2) oder in der Kugelschale (1) eine Stützbüchse (14) und eine Tragbüchse (28) axial verschiebbar und koaxial so angeordnet sind, daß sie vom Tragbolzen (4) mittig durchsetzt werden, daß Stützbüchse (14) und Tragbüchse (28) eine Außenschulter aufweisen, daß die Außenschultern mit Absätzen in der Kugelkalotte (2) oder Kugelschale (1) zusammenwirken und hierbei hydraulisch beaufschlagbare Ringkammern (24, 24a) bilden, daß die Außenschultern und Absätze so angeordnet sind, daß sich bei Beaufschlagung der Ringkammern (24, 24a) die Stützbüchse (14) und die Tragbüchse (28) voneinander weg bewegen, daß die Tragbüchse (28) an einem Bund an einem Ende des Tragbolzens (4) abgestützt ist und sich der Tragbolzen (4) an seinem anderen Ende auf der Kugelschale (1) abstützt, bzw. daß der Tragbolzen (4) an einem Ende durch einen Bund mit sphärischen Anlageflächen die Kugelkalotte (2) trägt und sich am anderen Ende auf der Tragbüchse (28) abstützt.

14. Vorrichtung nach Anspruch 7 mit einem als Tragbolzen ausgebildeten Verbindungselement, dadurch gekennzeichnet, daß in der Kugelkalotte (2) eine Stützbüchse (14) und eine Tragbüchse (28) axial verschiebbar und koaxial so angeordnet sind, daß sie vom Tragbolzen (4) mittig durchsetzt werden, daß Stützbüchse (14) und Tragbüchse (28) eine Außenschulter aufweisen, daß die Außenschultern mit Absätzen in der Kugelkalotte (2) zusammenwirken und hierbei hydraulisch beaufschlagbare Ringkammern (24, 24a) bilden, daß die Außenschultern und Absätze so angeordnet sind, daß sich Stützbüchse (14) und Tragbüchse (28) bei Beaufschlagung der Ringkammern (24, 24a) in der gleichen Richtung bewegen und daß der Tragbolzen (4) an der Kugelschale (1) elastisch abgestützt ist und an seinem anderen Ende an einem Bund über eine sphärische Fläche die Tragbüchse (28) trägt, wobei zwischen Stützbüchse (14) und Tragbüchse (28) die Vorspannfelder (11) angeordnet ist.

15. Vorrichtung nach Anspruch 8 mit einem als Tragbolzen ausgebildeten Verbindungselement, dadurch gekennzeichnet, daß der Tragbolzen (4) in der Kugelkalotte (2) an sphärischen Ringflächen auf eine Tragscheibe (41) wirkt, an der sich auch die Vorspannfeder (11) zur Beaufschlagung der Stützbüchse (14) abstützt und daß der Tragbolzen (4) in der Kugelschale (1) an eine hydraulische beaufschlagbare Kolben-Zylinder-Anordnung (29, 30) angeschlossen ist.

16. Vorrichtung nach Anspruch 8 mit einem als Tragbolzen ausgebildeten Verbindungselement, dadurch gekennzeichnet, daß der Tragbolzen (4) in der Kugelkalotte (2) über einen Bund an sphärischen Flächen auf eine axial verschiebbare und koaxial zum Tragbolzen (4) angeordnete Tragbüchse (28) wirkt, auf die auch die Vorspannfeder (11) für die Stützbüchse (14) abgestützt ist und daß die Tragbüchse (28) eine Außenschulter aufweist, die mit einem Absatz in der Kugelkalotte (2) eine hydraulisch beaufschlagbare Ringkammer (24a) bildet.

17. Vorrichtung nach Anspruch 8 mit einem als Tragbolzen ausgebildeten Verbindungselement, dadurch gekennzeichnet, daß die Kugelkalotte (2) an sphärischen Flächen auf einen Bund des Tragbolzens (4) abgestützt ist, daß in der Kugelschale (1) eine kombinierte Stütz-/Tragbüchse (14/28) angeordnet ist, die eine Außenschulter aufweist und mit einer Schulter (36) in der Kugelschale (1) eine hydraulisch beaufschlagbare Ringkammer (24a) bildet und daß der Tragbolzen (4) über eine Vorspannfeder (11) auf die Stütz-/Tragbüchse (14, 28) abgestützt ist.

**Claims**

1. Method for the mounting and adjustment of pressure plates in materials testing machines, which have a pressure plate with a spherical cup, a spherical shell which is connectable with the testing machine for receiving the spherical cup, and connecting elements for connecting the spherical cup and the spherical shell, the adjustment of the pressure plate to the inclination of the pressure surface of the test piece being effected first and thereafter, on loading, a relative movement between the spherical cup and spherical shell being prevented, characterised in that

- for the almost force-free adjustment of the pressure plate to the inclination of the pressure surface of the test piece which is brought against it whilst maintaining a centering of the spherical cup to the spherical shell, a first pair of contact surfaces is brought into effect, which pair consists of spherical shell and spherical cup elements which can be supported against each other and which are arranged concentrically to the spherical shell axis, and which pair forms a contact surface with slight friction,

- and that thereafter, on loading, a second pair of contact surfaces, consisting of a spherical cup and spherical shell, is brought into effect, the second contact surfaces having a high coefficient of friction, so that on resting the spherical cup against the spherical shell, a relative movement between the spherical cup and the spherical shell is prevented by frictional connection or respectively static friction.

2. Method according to Claim 1, characterised in that on the adjustment of the pressure plate, the central point of the spherical shell (A) lies in the pressure surface plane of the pressure plate and on loading the central point (A) lies beneath the pressure surface plane.

3. Method according to Claim 1 or 2, characterised in that the resistance of the pressure plate with respect to an alteration to its inclination is adjusted in that an initial stressing force acting on the contact surfaces and/or the ratio of the initial stressing forces acting on the contact surfaces is adjusted.

4. Method according to Claim 3, characterised in that at least one initial stressing force is altered before and/or during the test.

5. Method according to Claim 3 or 4, characterised in that the initial stressing force is produced or altered mechanically.

6. Method according to Claim 3 or 4, characterised in that the initial stressing force is produced or altered hydraulically.

7. Device for the mounting and adjustment of pressure plates in materials testing machines, which has a pressure plate (3) with a spherical cup (2), a spherical shell (1) which is connectable with the testing machine for receiving the spherical cup (2), and connecting elements for connecting the spherical cup and spherical shell, for carrying out the method according to one of Claims 1 to 6, characterised in that in the spherical shell (1) or in the spherical cup (2) at least one support element (9,14), which is movable with respect to the bearing surface of the spherical cup (2) or respectively with respect to the spherical shell (1), is arranged to support the spherical cup (2) on the spherical shell (1), that the surface of the support element which comes into contact with the spherical shell (1) or respectively spherical cup (2) has good sliding properties and that the support element for supporting the spherical cup (2) on the spherical shell (1) can be acted upon by springs (11) or hydraulically via cylinder/piston arrangements.

8. Device according to Claim 7, characterised in that the support elements are constructed as centrally arranged support sleeve (14) or in the form of at least three support pins (9) which are distributed over the surface of the spherical shell (1) or respectively the spherical cup (2).

9. Device according to Claim 8 with a connecting element constructed as a carrier pin, characterised in that the carrier pin (4) is arranged in the spherical shell (1) and is passed through a central opening of the support sleeve (14), that the support sleeve (14) rests with an inner shoulder on a collar of the carrier pin, the support between the collar of the carrier pin (4) and the support sleeve (14) taking place via spherical surfaces (20), that the support sleeve (14) has an outer shoulder (10), against which the spherical cup (2) can be placed and that a prestressing spring (11) is provided, with which the support sleeve (14) and the spherical cup (2) can be braced against each other such that the contact surface of the support sleeve projects beyond the contact surface of the spherical cup (2).

10. Device according to Claim 9, characterised in that an annular chamber (24), which is formed between the outer shoulder (10) of the axially movable support sleeve (14) and the spherical cup (2), can be acted upon by a pressure medium.

11. Device according to Claim 8, with a connecting element constructed as a carrier pin, characterised in that the support pins (9) have a collar (13) and are supported by a spring (11) against the spherical cup (2) and that the spherical cup (2) is supported against spherical surfaces on a collar of the carrier pin (4).

12. Device according to Claim 8, characterised in that the support elements consist of cylinders (19), pistons (17) with sealing rings (17a), support pins (9) and threaded plugs (18) with sealing rings (18a).

13. Device according to Claim 7 with a connecting element constructed as a carrier pin, characterised in that in the spherical cup (2) or in the spherical shell (1) a support sleeve (14) and a carrier sleeve (28) are arranged axially movably and coaxially such that they are penetrated centrally by the carrier pin (4), that the support sleeve (14) and carrier sleeve (28) have an outer shoulder, that the outer shoulders cooperate with steps in the spherical cup (2) or spherical shell (1) and thereby form annular chambers (24, 24a) which can be acted upon hydraulically, that the outer shoulders and steps are arranged such that when the annular chambers (24, 24a) are acted upon, the support sleeve (14) and the carrier sleeve (28) move away from each other, that the carrier sleeve (28) is supported on a collar on one end of the carrier pin (4) and the carrier pin (4) supports itself on its other end on the spherical shell (1), or respectively that the carrier pin (4) carries the spherical cup (2) on one end through a collar with spherical contact surfaces and supports itself on the other end on the carrier sleeve (28).

14. Device according to Claim 7 with a connecting element constructed as a carrier pin, characterised in that in the spherical cup (2) a support sleeve (14) and a carrier sleeve (28) are arranged axially movably and coaxially such that they are penetrated centrally by the carrier pin (4), that the support sleeve (14) and carrier sleeve (28) have an outer shoulder, that the outer shoulders cooperate with steps in the spherical cup (2) and thereby form annular chambers (24, 24a) which can be acted upon hydraulically, that the outer shoulders and steps are arranged such that when the annular chambers (24, 24a) are acted upon, the support sleeve (14) and carrier sleeve (28) move in the same direction and that the carrier pin (4) is supported elastically against the spherical shell (1) and carries the carrier sleeve (28) on its other end on a collar via a spherical surface, the prestressing spring (11) being arranged between the support sleeve (14) and carrier sleeve (28).

15. Device according to Claim 8 with a connecting element constructed as a carrier pin, characterised in that the carrier pin (4) acts on a carrier disc (41) in the spherical cup (2) on spherical annular surfaces, against which disc the prestressing spring (11) also supports itself for action upon the support sleeve (14) and that the carrier pin (4) in the spherical shell (1) is connected to a piston/cylinder arrangement (29, 30) which is able to be acted upon hydraulically.

16. Device according to Claim 8 with a connecting eelement constructed as a carrier pin, characterised in that the carrier pin (4) in the spherical cup (2) acts via a collar on spherical surfaces on an axially movable carrier sleeve (28) which is arranged coaxially to the carrier pin (4), on which carrier sleeve the prestressing spring (11) for the support sleeve (14) is also supported and that the carrier sleeve (28) has an outer shoulder, which with a step in the spherical cup (2) forms an annular chamber (24a) which can be acted upon hydraulically.

17. Device according to Claim 8 with a connecting element constructed as a carrier pin, characterised in that the spherical cup (2) is supported on spherical surfaces on a collar of the carrier pin (4), that in the spherical shell (1) a combined support/carrier sleeve (14, 28) is arranged, which has an outer shoulder and with a shoulder (36) in the spherical shell (1) forms an annular chamber (24a) which can be acted upon hydraulically and that the carrier pin (4) is supported via a prestressing spring (11) on the support/carrier sleeve (14, 28).

**Revendications**

1. Procédé pour positionner et régler des plaques de pression dans des machines d'essai de matériaux, qui comportent une plaque de pression avec une calotte sphérique, une cuvette sphérique pouvant être reliée à la machine d'essai et recevant la calotte sphérique, et des éléments de liaison pour relier la calotte sphérique et la cuvette sphérique, selon lequel on effectue d'abord le réglage de la plaque de pression sur l'inclinaison de la surface de pression de l'échantillon, et ensuite, lors de la charge, on empêche un mouvement relatif entre la calotte sphérique et la cuvette sphérique, caractérisé en ce que:

- pour régler pratiquement sans force la plaque de pression sur l'inclinaisan de la surface de pression de l'échantillon approché contre cette plaque en respectant le centrage de la calotte sphérique par rapport à la cuvette sphérique, une première paire de surfaces de contact entre en action, laquelle paire est constituée d'éléments de cuvette sphérique et de calotte sphérique pouvant s'appuyer l'un contre l'autre et disposés concentriquement à l'axe de la cuvette sphérique, et forme une surface de contact à faible frottement, et en ce que:

- ensuite, lors de la charge, une deuxième partie de surface de contact, constituée par la calotte sphérique et la cuvette sphérique, entre en action les deuxièmes surfaces de contact ayant un coefficient de frottement élevé, de sorte que, lorsque la calotte sphérique vient s'appliquer sur la cuvette sphérique, on empêche un mouvement relatif entre la calotte sphérique et la cuvette sphérique, par action mécanique ou adhérence.

2. Procédé selon la revendication 1, caractérisé en ce que, lors du réglage de la plaque de pression, le centre (A) de la cuvette sphérique se trouve dans le plan de la surface de pression de la plaque de pression, et lors de la charge, le centre (A) se trouve sous le plan de la surface de pression.

3. Procédé selon la revendication 1 ou 2, caractérisé en ce que la résistance de la plaque de pression à une variation de son inclinaison est réglée par le fait qu'on régle une force de précontrainte agissant sur les surfaces de contact et/ou le rapport des forces de précontrainte agissant sur les surfaces de contact.

4. Procédé selon la revendication 3, caractérisé en ce qu'on fait varier au moins une force de précontrainte avant et/ou pendant l'essai.

5. Procédé selon la revendication 3 ou 4, caractérisé en ce que la production ou la variation de la force de précontrainte est provoquée mécaniquement.

6. Procédé selon la revendication 3 ou 4, caractérisé en ce que la production ou la variation de la force de précontrainte est provoquée hydrauliquement.

7. Dispositif pour positionner et régler des plaques de pression dans des machines d'essai de matériaux, lequel comporte une plaque de pression (3) avec une calotte sphériqlue (2), une cuvette sphérique (1) pouvant être reliée à la machine d'essai et recevant la calotte sphérique (2), et des éléments de liaison pour relier la calotte sphérique et la cuvette sphérique, pour mettre en oeuvre le procédé selon selon l'une des revendications 1 à 6, caractérisé en ce qu'on dispose dans la cuvette sphérique (1) ou dans la calotte sphérique (2) au moins un élément support (9, 14) pouvant être déplacé contre la surface de positionnement de la calotte sphérique (2) ou de la cuvette sphérique (1) pour soutenir la calotte sphérique (2) contre la cuvette sphérique (1), que la surface de l'élément support venant en contact avec la cuvette sphérique (1) ou la calotte sphérique (2) possède de bonnes propriétés de glissement, et que l'élément support pour soutenir la calotte sphérique (2) contre la cuvette sphérique (1) peut être assujetti à des ressorts (11) ou être alimenté hydrauliquement par des vérins.

8. Dispositif selon la revendication 7, caractérisé en ce que les éléments supports sont réalisés sous forme de douille de soutien (14) disposée au centre ou sous la forme d'au moins trois tiges de soutien (9) réparties sur la surface de la cuvette sphérique (1) ou de la calotte sphérique (2).

9. Dispositif selon la revendication 3, comportant un élément de liaison réalisé en tant que tige porteuse, caractérisé en ce que la tige porteuse (4) est disposée sur la cuvette sphérique (1) et est guidée à travers une ouverture centrale de la douille de soutien (14), en ce que la douille de soutien (14) appuie par un épaulement intérieur sur une collerette de la tige porteuse, l'appui entre la collerette de la tige porteuse (4) et la douille de soutien (14) se faisant par l'intermédiare de surfaces sphériques (20), en ce que la douille de soutien (14) comporte un épaulement extérieur (10) sur lequel peut s'appliquer la calotte sphérique (2) et en ce qu'on prévoit un ressort de précontrainte (11) avec lequel la douille de soutien (14) et la calotte sphérique (2) peuvent être serrées l'une contre l'autre de telle sorte que la surface de contact de la douille de soutien dépasse au-dessus de la surface de contact de la calotte sphérique (2).

10. Dispositif selon la revendication 9, caractérisé en ce qu'une chambre annulaire (24) entre l'épaulement extérieur (10) de la douilie de soutien (14) déplaçable axialement et la calotte sphérique (2) peut être alimentée avec un fluide de pression.

11. Dispositif selon la revendication 3, comportant un élément de liaison réalisé en tant que tige porteuse, caractérisé en ce que les tiges de soutien (9) comportent une collerette (13) et s'appuient par l'intermédiaire d'un ressort (11) sur la calotte sphérique (2) et en ce que la calotte sphérique (2) s'appuie par des surfaces sphériques sur une collerette de la tige porteuse (4).

12. Dispositif selon la revendication 3, caractérisé en ce que les éléments de soutien sont constitués par des ccylindres (19), des pistons (17) avec des joints d'étanchéité annulaires (17a), des tiges de soutien (9) et des bouchons filetés (18) avec le joint d'étanchéité annulaire (18a).

13. Dispositif selon la revendication 7 comportant un élément de liaison réalisé en tant que tige porteuse, caractérisé en ce qu'on dispose coaxialement dans la calotte sphérique (2) ou dans la cuvette sphérique (1) une douille de soutien (14) et une douille porteuse (28) pouvant se déplacer dans le sens axial, de telle sorte qu'elles sont traversées au centre par la tige porteuse (4), en ce que la douille de soutien (14) et la douille porteuse (28) comportent un épaulement extérieur, en ce que les épaulements coopèrent avec des décrochements dans la calotte sphérique (2) ou dans la cuvette sphérique (1) et constituent ainsi des chambres annulaires (21, 24a) pouvant être alimentées par un fluide hydraulique, en ce que les épaulements extérieurs et les décrochements sont disposés de telle sorte que, lors de l'alimentation des chambres annulaires (24, 24a), la douille de soutien (14) et la douille porteuse (28) s'éloignent l'une de l'autre, en ce que la douille porteuse (28) s'appuie sur une collerette à une extrémité de la tige porteuse (4) et la tige porteuse (4) s'appuie à son autre extrémité sur la cuvette sphérique (1), ou en ce que la tige porteuse (4) porte à une extrémité la calotte sphérique à l'aide d'une collerette ayant des surfaces d'appui sphériques et s'appuie à l'autre extrémité sur la douille porteuse (28).

14. Dispositif selon la revendication 7 comportant un élément de liaison réalisé en tant que tige porteuse, caractérisé en ce qu'on dispose coaxialement dans la calotte sphérique (2) une douille de soutien (14) et une douille porteuse (28) déplaçables dans le sens axial, de telle sorte qu'elles sont traversées au centre par la tige porteuse (4), en ce que la douille de soutien (14) et la douille porteuse (28) comportent un épaulement extérieur, en ce que les épaulements extérieurs coopèrent avec des décrochements dans la calotte sphérique (2) et forment ici des chambres annulaires (24, 24a) pouvant être alimentées en fluide hydraulique, en ce que les épaulements extérieurs et les décrochements sont disposés de telle sorte que, lors de l'alimentation des chambres annulaires (24, 24a), la douille de soutien (14) et la douille porteuse (28) se déplacent dans le même sens et en ce que la tige porteuse (4) s'appuie élastiquement sur la cuvette sphérique (1) et porte la douille porteuse (28) à son autre extrémité sur une collerette par l'intermédiaire d'une surface sphérique, le ressort de précontraite (11) étant disposé entre la douille de soutien (14) et la douille porteuse (28).

15. Dispositif selon la revendication 8, comportant un élément de liaison réalisé en tant que tige porteuse, caractérisé en ce que la tige porteuse (4) dans la calotte sphérique (2) agit par des surfaces annulaires sphériques sur un disque porteur (41) sur lequel s'appuie également le ressort de précontrainte (11) pour l'alimentation de la doulle de soutien (14), et en ce que la tige porteuse (4) dans la cuvette sphérique (1) est raccordée à un agencement de vérins (29, 30) pouvant être alimente en fluide hydraulique.

16. Dispositif selon la revendication 3 comportant un élément de liaison réalisé en tant que tige porteuse, caractérisé en ce que la tige porteuse (4) dans la calotte sphérique (2) agit par l'intermédiaire d'une collerette prévue sur des surfaces sphériques, sur une douille porteuse (23) pouvant être déplacée axialement et disposée coaxialement à la tige porteuse (4), douille porteuse sur laquelle s'appuie également le ressort de précontrainte (11) pour la douille de soutien (14), et en ce que la douille porteuse (28) comporte un épaulement extérieur qui constitue avec un décrochement dans la calotte sphérique (2) une chambre annulaire (24a) pouvant être alimentée en fluide hydraulique.

17. Dispositif selon la revendication 8, comportant un élément de liaison réalisé en tant que tige porteuse, caractérisé en ce que la calotte sphérique (2) s'appuie sur des surfaces sphériques prévues sur une collerette de la tige porteuse (4), en ce qu'on dispose dans la cuvette sphérique (1) une douille de soutien et porteuse combinée (14/28) qui comporte un épaulement extérieur et forme avec un épaulement (36) dans la cuvette sphérique (1) une chambre annulaire (24a) pouvant être alimentée en fluide hydraulique, et en ce que la tige porteuse (4) s'appuie par l'intermédiaire d'un ressort de précontrainte (11) sur la douille de soutien porteuse (14, 28).

Fig. 1a          Fig. 1b

Fig. 2a          Fig . 2b

Fig. 3b

Fig. 3a

Fig. 4a        Fig. 4b

Fig. 5

Fig. 6

Fig. 7

Fig.8

Fig. 9 a    Fig. 9 b

Fig. 10.

Fig. 11

0 070 480

Fig. 12

14

11

28

24a

19

Fig. 13

39
33
34
4
11
14

Fig. 14          Fig. 15